(19) Europäisches Patentamt
European Patent Office
Office européen des brevets

(11) **EP 2 161 127 A1**

(12) **EUROPEAN PATENT APPLICATION**
published in accordance with Art. 153(4) EPC

(43) Date of publication:
**10.03.2010 Bulletin 2010/10**

(51) Int Cl.:
**B32B 27/30** (2006.01)   **B01D 71/36** (2006.01)
**B32B 5/22** (2006.01)   **C08J 9/00** (2006.01)

(21) Application number: **08765771.4**

(22) Date of filing: **20.06.2008**

(86) International application number:
**PCT/JP2008/061351**

(87) International publication number:
**WO 2008/156173 (24.12.2008 Gazette 2008/52)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.06.2007   JP 2007163814**

(71) Applicant: **Nitto Denko Corporation**
**Ibaraki-shi, Osaka 567-8680 (JP)**

(72) Inventors:
• **NAGAYAMA, Tomoyoshi**
**Ibaraki-shi**
**Osaka 567-8680 (JP)**
• **UCHIDA, Youji**
**Ibaraki-shi**
**Osaka 567-8680 (JP)**
• **NAKAZONO, Junichi**
**Ibaraki-shi**
**Osaka 567-8680 (JP)**

(74) Representative: **Hart-Davis, Jason et al**
**Cabinet Beau de Loménie**
**158, rue de l'Université**
**75340 Paris Cedex 07 (FR)**

(54) **ROLL OF POROUS POLYTETRAFLUOROETHYLENE SHEET AND TAPE ROLL**

(57) The present invention provides a sheet roll of a porous polytetrafluoroethylene membrane in which during production a winding-up operation is easy and a cutting operation also is easy, as well as a tape roll of a porous polytetrafluoroethylene membrane that is difficult to lose its shape. The present invention provides a sheet roll comprising a laminate of a porous polytetrafluoroethylene membrane and a support, wherein the laminate is wound up, as well as a tape roll comprising a laminate of a porous polytetrafluoroethylene membrane and a support, wherein the laminate is wound up. The latter tape roll can be obtained by cutting the former sheet roll.

FIG. 1

**Description**

**Technical Field**

The present invention relates to a sheet roll and a tape roll in which a porous polytetrafluoroethylene (PTFE) membrane is wound up.

**Background Art**

Porous PTFE membranes are excellent in various properties, such as heat resistance, chemical resistance, lubricity, low frictional property, electrical insulation property, flexibility, and air permeability, and therefore, they are made use of in a wide variety of fields, such as a filtration membrane, aeration material, separation membrane for cell, electrical insulation material, artificial blood vessel, and bundling material for cables.

A common method for producing a porous PTFE membrane is a stretching method (e.g., see JP 42(1967)-13560 B and JP 51(1976)-18991 B). In the stretching method, a mixture of PTFE powder and a liquid lubricant is formed into a film, and then the film is stretched so as to be made porous. After stretching, sintering is carried out, as required, at a temperature not less than the melting point of PTFE in order to enhance the strength of the porous membrane.

The porous PTFE membrane produced by the stretching method is eventually wound up around a core so as to form a sheet roll. The sheet roll is often shipped after it is cut into a predetermined width depending on its type of usage.

Since the porous PTFE membrane is a material having a high flexibility, the sheet tension when winding up around the core does not become constant, and there are some cases where a winding-up operation becomes difficult. In addition, when tape rolls are produced by cutting the sheet roll into a predetermined width, there are some cases where a cutting operation is not preformed smoothly since the porous PTFE membrane wound up serves as a cushion. Furthermore, there are some cases where the tape of the porous PTFE membrane wound up comes loose so that a final product loses its shape.

**Disclosure of Invention**

Hence, it is an object of the present invention to provide a sheet roll of a porous PTFE membrane in which during production a winding-up operation is easy and a cutting operation also is easy. It is a further object of the present invention to provide a tape roll of a porous PTFE membrane that is difficult to lose its shape.

The sheet roll of the present invention is a sheet roll comprising a laminate of a porous PTFE membrane and a support, wherein the laminate is wound up.

The tape roll of the present invention is a tape roll comprising a laminate of a porous PTFE membrane and a support, wherein the laminate is wound up.

The sheet roll of the present invention is a sheet roll in which during production a winding-up operation is easy and a cutting operation also is easy.
The tape roll of the present invention is difficult to lose its shape.

**Brief Description of the Drawings**

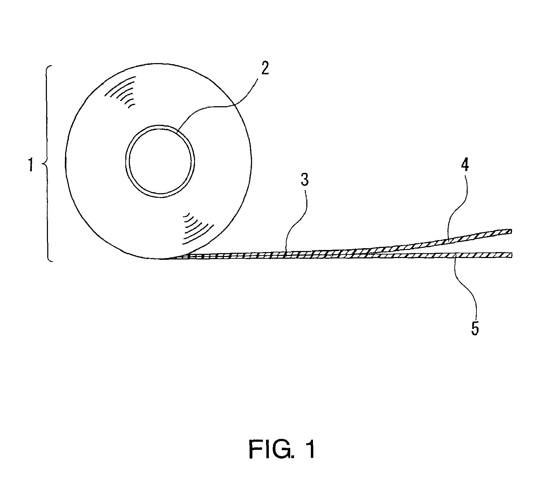

Fig. 1 is a side view of a typical embodiment of the sheet roll of the present invention.

**Best Mode for Carrying Out the Invention**

A porous PTFE membrane used in the present invention is produced generally by a stretching method. A lengthy porous PTFE membrane obtained by a method other than the stretching method also can be used.

One specific example of the stretching method will be described. First, a paste-like mixture in which a liquid lubricant is added to PTFE fine powder is subjected to preforming. The PTFE fine powder is a preferable as a PTFE material since it allows paste extrusion to be performed easily. The liquid lubricant is not particularly limited as long as it is capable of wetting the surface of the PTFE fine powder and of being removed by extraction or heating. Examples thereof include hydrocarbons such as liquid paraffin, naphtha, and white oil. The suitable amount of the liquid lubricant to be added is about 5 to 50 parts by weight with respect to 100 parts by weight of the PTFE fine powder. The above preforming is carried out under the pressure at which the liquid lubricant is not squeezed out.

Next, the preformed product is subjected preferably to paste extrusion so that a formed product is obtained. The shape of the formed product is not particularly limited as long as the formed product can be stretched. Examples thereof may include a tape, sheet, and tube. The dimension of the formed product may be such a dimension that a desired thickness of the porous PTFE membrane is obtained by the after-mentioned stretching. The liquid lubricant may be removed appropriately by a conventional method when the formed product is obtained.

The formed product is stretched in at least one axial direction, and thereby a porous PTFE membrane is obtained. The stretch ratio is not particularly specified, but an area stretch ratio (product of a stretch ratio in an uniaxial direction and a stretch ratio in a direction orthogonal thereto) is preferably 50 to 900 times with consideration given to nonuniformity of stretching or fracture during stretching. The stretch temperature also is not particularly specified and generally less than the melting point (327°C) of PTFE (and typically 150 to 300°C).

When the enhancement of strength, improvement of dimensional stability, or the like is desired, the porous PTFE membrane is sintered by heating the porous PTFE membrane at the temperature not less than the melting point of PTFE (typically 330 to 500°C) within generally 60 seconds. The sintering may be performed while stretching with the stretch temperature being set to a temperature not less than the melting point of PTFE.

In the present invention, the thickness of the porous PTFE membrane may be selected appropriately depending on its application and type of usage, and for example, is not less than 10 $\mu$m and not more than 80 $\mu$m.

In the present invention, the porosity of the porous PTFE membrane may be determined appropriately depending on its application and type of usage, and in general, is preferably not less than 50% and not more than 80%, more preferably not less than 60% and not more than 80%, and particularly preferably not less than 65% and not more than 75%.

In the present invention, the porous PTFE membrane may be a sintered product or an unsintered product.

One preferable example of the porous PTFE membrane is an unsintered porous PTFE membrane that has the porosity of not less than 50% and not more than 80%, the extension in a longitudinal direction of 200% or less, the strength in a longitudinal direction of not less than 20 N/mm$^2$ and not more than 80 N/mm$^2$, the extension in a width direction of 1000% or more, and the strength in a width direction of 1 N/mm$^2$ or less. This porous PTFE membrane has a self-adhesive property so that when two sheets of the porous PTFE membrane are overlapped, they bond to each other. A tape using the porous PTFE membrane having this self-adhesive property is useful as a bundling tape for binding cables, particularly micro coaxial cables used as a wiring material in a hinge or the like of a mobile phone, laptop computer, digital camera, digital video camera, medical apparatus, or the like. The bundling tape makes a rewinding operation easy and is usable for a temporary fixing purpose. With respect to the preferred properties of the porous PTFE membrane having the self-adhesive property, the porous PTFE membrane is an unsintered porous PTFE membrane having the porosity of not less than 65% and not more than 75%, the extension in a longitudinal direction of not less than 100% and not more than 200%, the strength in a longitudinal direction of not less than 40 N/mm$^2$ and not more than 80 N/mm$^2$, the extension in a width direction of not less than 1000% and not more than 6500%, and the strength in a width direction of not less than 0.1 N/mm$^2$ and not more than 1.0 N/mm$^2$. It should be noted that the strength and extension can be measured by a tensile test described in detail in the after-mentioned Examples.

With respect to the tape roll and sheet roll using the porous PTFE membrane having the self-adhesive property, unintended adhesion between the porous PTFE membranes may occur. However, when the porous PTFE membrane having the self-adhesive property is used in the tape roll and sheet roll of the present invention, the porous PTFE membranes are separated into each layer with the porous PTFE membrane being supported on the support, and thereby unintended adhesion between the porous PTFE membranes is difficult to occur, resulting in excellent handleability of the tape roll and sheet roll.

The porous PTFE membrane having the self-adhesive property can be obtained by carrying out the above stretching at generally 240 to 300°C, preferably 270 to 290°C at the stretch ratio of generally 5 to 15 times, preferably 6 to 10 times in one-axial direction (the longitudinal direction).

In the present invention, a laminate of a porous PTFE membrane and a support is used. This support supports the porous PTFE membrane and particularly, plays a roll of supporting the porous PTFE membrane so as to prevent the porous PTFE membrane from deforming excessively. Accordingly, as the support, any material having a flexibility enough to be rolled up, hardness capable of imparting suitable hardness to the sheet roll when cutting the sheet roll, and strength and elasticity that can make an operation of winding up the roll easy and prevent the sheet roll from losing its shape can be used without any limitation.

The material of the support is preferably a resin and/or paper. Accordingly, as the support, a resin film, paper, and composite film in which a resin is coated on at least one side of paper are used preferably. Examples of the resin film include a polyester film, polypropylene film, and polyethylene film. Examples of the paper include, art paper, and coated paper. Examples of the composite film include a film in which a resin component of the above-mentioned resin films is coated on paper. The particularly preferable support is a polyester film since the polyester film has a suitable strength, high thickness accuracy and excellent property of releasing the porous PTFE membrane.

Polyester constituting the polyester film has a structure that is obtained by condensing (co-condensing) at least one polyol (particularly diol) selected from ethylene glycol, 1,3-propanediol, 1,4-butanediol, 1,6-cyclohexanedimethanol and the like, and at least one polycarboxylic acid (particularly dicarboxylic acid) selected from terephthalic acid, 2,6-naphthalenedicarboxylic acid and the like. Specific examples thereof include polyethylene terephthalate (PET), polybutylene terephthalate (PBT), and polyethylene naphthalate (PEN). Among them, PET is particularly preferable since PET is excellent in all of cost, strength, and thickness accuracy.

The thickness of the support is preferably not less than 25 m and not more than 50 $\mu$m, and more preferably not less than 25 $\mu$m and not more than 38 $\mu$m.

The laminate of the porous PTFE membrane and the support may be the one in which the porous PTFE membrane is just overlapped with the support without adhering to one another. In other words, the laminate may be the one in which the porous PTFE membrane is overlapped directly on the support. A preferable lamination method is a pressure bonding, and the pressure for the pressure bonding is preferably 0.1 to 0.3 MPa.

The thickness of the laminate is preferably not less than 35 $\mu$m and not more than 130 $\mu$m, and more preferably not less than 35 $\mu$m and not more than 118 $\mu$m.

Both of the sheet roll and tape roll are formed by winding up the laminate, and in general, the tape roll is produced by cutting the sheet roll. In the present invention, however, these are distinguished based on their widths. That is to say, a sheet roll is defined as a roll having the width of more than 50 mm, and a tape roll is defined as a roll having the width of not more than 50 mm. The width of the tape roll is practically preferably 1 to 50 mm.

With respect to the laminate wound up so as to form the sheet roll or tape roll, either of the porous PTFE membrane and the support may be located in the upper surface side (an outermost circumference of the roll is a upper surface).
From the view point of the protection of the porous PTFE membrane, it is preferable that the support is located in the upper surface side.

The dimensions of a sheet roll and tape roll may be determined appropriately depending on its application and type of usage. From a view point of easiness of winding-up operation and shape stability, a sheet roll and tape roll generally has a core but the embodiment without core is also possible. Known cores may be used for the core.

Fig. 1 shows schematic side view of a typical embodiment of the sheet roll of the present invention. A laminate 3 of a porous PTFE membrane 4 and a support (e.g., polyester film) 5 is wound up around a core 2 so as to form a sheet roll 1. In order to protect the porous PTFE membrane 4, the support 5 is located in the upper surface side (side of outer circumference of the roll) of the sheet roll 1. When the porous PTFE membrane 4 is used, the porous PTFE membrane 4 can be peeled off easily from the support 5 from the terminal of the laminate 3 wound off as shown in Fig. 1. It should be noted that a side view of a tape roll is the same as Fig. 1.

A production of a porous PTFE sheet roll typically includes a step of preforming a mixture of PTFE fine powder and a liquid lubricant, a step of forming the obtained preformed product, a step of stretching the obtained formed product, a (optional) step of sintering a porous PTFE membrane, and a step of winding up the porous PTFE membrane. The sheet roll of the present invention can be produced, for example, by performing an additional step of laminating a porous PTFE membrane and a support using pressure rollers or the like before the step of winding up. In addition, the tape roll of the present invention can be obtained by cutting the sheet roll into a predetermined width using a cutter, slitter, or the like.

Here, the lamination of the porous PTFE membrane and the support gives a stable sheet tension during winding-up and thereby the step of winding up can be easily performed. Furthermore, it makes it easy to cut the obtained sheet roll, and thereby, the occurrence rate of defective products during cutting becomes lower. With respect to the cut tape roll, losing a shape of the final product, which occurs when the wound-up tape comes loose, is unlikely to occur, and the final product is good in handleability.

The support is easily removed in use because in the laminate the porous PTFE membrane and the support may just be overlapped directly. The sheet roll and tape roll of the present invention can be used as a porous PTFE membrane in various applications, such as a filtration membrane, aeration material, separation membrane for cell, electrical insulation material, artificial blood vessel, and bundling material for cables, after the sheet roll and tape roll are wound off by a predetermined length, cut, and processed as required.

Hereinafter, the present invention will be described in detail by way of Examples and Comparative Example, but the present invention is not limited by the following Examples.

Example 1

Using PTFE fine powder, a sheet having a thickness of 0.15 mm was produced by paste extrusion. This sheet was stretched 10 times in the longitudinal direction at 280°C and thus the porous PTFE membrane was produced. The laminate was obtained by pressure-bonding the porous membrane and a polyester film having a thickness of 25 $\mu$m as a support under the pressure of 0.2 MPa using pressure rollers. The laminate was wound up around a core having an outside diameter of 85 mm, and thereby a sheet roll of the porous PTFE membrane having a thickness of 0.035 mm was obtained. The tension of the laminate during winding-up was constant and the laminate was wound up easily. After that, the sheet was cut into a width of 25 mm and thus a tape roll was obtained. In this regard, cutting was carried out easily and the tape roll did not lose its shape.

Example 2

Using PTFE fine powder, a sheet having a thickness of 0.15 mm was produced by paste extrusion. This sheet was stretched 10 times in the longitudinal direction at 280°C and thus the porous PTFE membrane was produced. The laminate was obtained by pressure-bonding the porous membrane and a polyester film having a thickness of 25 $\mu$m as a support under the pressure of 0.3 MPa using pressure rollers. The laminate was wound up around a core having an outside diameter of 85 mm, and thereby a sheet roll of the porous PTFE membrane having a thickness of 0.026 mm was obtained. The tension of the laminate during winding-up was constant and the laminate was wound up easily. After that, the sheet was cut into a width of 25 mm and thus a tape roll was obtained. In this regard, cutting was carried out easily and the tape roll did not lose its shape.

Comparative Example 1

Using PTFE fine powder, a sheet having a thickness of 0.15 mm was produced by paste extrusion. This sheet was stretched 10 times in the longitudinal direction at 280°C and thus the porous PTFE membrane was produced. The porous PTFE membrane was wound up around a core having an outside diameter of 85 mm, and thereby a sheet roll of the porous PTFE membrane having a thickness of 0.08 mm was obtained. The tension of the laminate during winding-up was not constant and needed to be adjusted appropriately. After that, the sheet was cut into a width of 25 mm and thus a tape roll was obtained. In this regard, a rate of defective products, such as a product that was not cut neatly and a product that lost its shape, was about 40%.

The properties of the porous PTFE membranes wound off from the tape rolls obtained in Examples 1 and 2 was evaluated as follows. Table 1 shows the results. The porous PTFE membranes wound off from the tape rolls obtained in Examples 1 and 2 showed a self-adhesive property.

(1) Porosity

The porosity of the porous PTFE membrane was obtained by calculating a bulk density using the volume and weight of the porous PTFE membrane and then calculating from the following formula in which a true density of the PTFE resin is set to 2.28 g/cm$^3$:

$$\{1\text{-} \ (\text{weight [g]} / (\text{thickness [cm]} \times \text{area [cm}^2\text{]} \times \text{true density [2.28 g/cm}^3\text{])} ) \} \times 100 \ (\%)$$

(2) Self-adhesive strength

Two pieces of a sample of the porous PTFE membrane that had been cut in the strip shape having the dimension of width 25 mm $\times$ length 100 mm was overlapped so that only an area of width 25 mm $\times$ length 25 mm was overlapped. Then, they were pressure-bonded using rolls having a weight of 2 kg. One end was fixed and a weight was hanged from the other end. The tensile retention strength was measured through a push pull gauge.

(3) Strength and extension

A sample of the porous PTFE membrane that had been cut in the strip shape having the dimension of width 20 mm $\times$ length 100 mm was fixed in the tensile tester with the distance between the chucks being set to 10 mm. The sample was pulled at a speed of 200 mm/min until the sample was fractured. The strength and extension was obtained by calculating from the following formulas:

$$\text{Strength (N/mm}^2\text{)} = \text{stress at fracture (N)} / \text{cross-sectional area (thickness} \times \text{width of the sample) (mm}^2\text{)}$$

$$\text{Extension (\%)} = \text{distance between the chucks at fracture} / \text{initial distance between the chucks} \times 100$$

Table 1

|  |  |  | Example 1 | Example 2 |
|---|---|---|---|---|
|  | Stretch temperature | °C | 280 | 280 |
|  | Stretching ratio | Times | 10 | 10 |
|  | Thickness | $\mu$m | 35 | 26 |
|  | Porosity | % | 70 | 55 |
|  | Self-adhesive strength | g | 400 | 200 |
| Longitudinal direction | Extension | % | 120 | 140 |
|  | maximum strength | N/mm$^2$ | 40 | 50 |
| Width direction | Extension | % | 3700 or more | 3700 or more |
|  | maximum strength | N/mm$^2$ | 0.60 | 0.75 |

**Industrial Applicability**

The sheet roll and tape roll of the present invention can be used as a porous PTFE membrane in various applications, such as a filtration membrane, aeration material, separation membrane for cell, electrical insulation material, artificial blood vessel, and bundling material for cables, after the sheet roll and tape roll are wound off by a predetermined length, cut, and processed as required.

**Claims**

1.  A sheet roll comprising a laminate of a porous polytetrafluoroethylene membrane and a support, wherein the laminate is wound up.

2.  A tape roll comprising a laminate of a porous polytetrafluoroethylene membrane and a support, wherein the laminate is wound up.

3.  The tape roll according to claim 2, wherein the material of the support is a resin and/or paper.

4.  The tape roll according to claim 2, wherein the support is a polyester film.

5.  The tape roll according to claim 2, wherein the thickness of the porous membrane is not less than 10 $\mu$m and not more than 80 $\mu$m.

6.  The tape roll according to claim 2,
    wherein the porous membrane is an unsintered porous polytetrafluoroethylene membrane, and
    the porous membrane has the porosity of not less than 50% and not more than 80%, the extension in a longitudinal direction of 200% or less, the strength in a longitudinal direction of not less than 20 N/mm$^2$ and not more than 80 N/mm$^2$, the extension in a width direction of 1000% or more, and the strength in a width direction of 1 N/mm$^2$ or less.

FIG. 1

EP 2 161 127 A1

## INTERNATIONAL SEARCH REPORT

| | International application No. |
|---|---|
| | PCT/JP2008/061351 |

A.　CLASSIFICATION OF SUBJECT MATTER
*B32B27/30*(2006.01)i, *B01D71/36*(2006.01)i, *B32B5/22*(2006.01)i, *C08J9/00*(2006.01)i

According to International Patent Classification (IPC) or to both national classification and IPC

B.　FIELDS SEARCHED

Minimum documentation searched (classification system followed by classification symbols)
B32B27/30, B01D71/36, B32B5/22, C08J9/00

Documentation searched other than minimum documentation to the extent that such documents are included in the fields searched
　　Jitsuyo Shinan Koho　　　1922-1996　　Jitsuyo Shinan Toroku Koho　1996-2008
　　Kokai Jitsuyo Shinan Koho　1971-2008　Toroku Jitsuyo Shinan Koho　1994-2008

Electronic data base consulted during the international search (name of data base and, where practicable, search terms used)

C.　DOCUMENTS CONSIDERED TO BE RELEVANT

| Category* | Citation of document, with indication, where appropriate, of the relevant passages | Relevant to claim No. |
|---|---|---|
| X<br>A | JP 2005-171171 A　(Toyota Motor Corp.),<br>30 June, 2005 (30.06.05),<br>Par. Nos. [0009] to [0034]; table 1<br>(Family: none) | 1-5<br>6 |
| X<br>A | JP 07-292144 A　(Daikin Industries, Ltd.),<br>07 November, 1995 (07.11.95),<br>Par. Nos. [0017] to [0041]<br>& WO 1995/029950 A1　　& EP 707033 A1<br>& EP 707033 A4　　　　& US 5834528 A<br>& JP 3003500 B2　　　　& EP 707033 B1 | 1-5<br>6 |
| X<br>A | JP 2006-143962 A　(Nitto Denko Corp.),<br>08 June, 2006 (08.06.06),<br>Par. Nos. [0015] to [0031]<br>(Family: none) | 1-5<br>6 |

☐　Further documents are listed in the continuation of Box C.　　☐　See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered　to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>　　05 September, 2008 (05.09.08) | Date of mailing of the international search report<br>　　16 September, 2008 (16.09.08) |
|---|---|
| Name and mailing address of the ISA/<br>　　Japanese Patent Office | Authorized officer |
| Facsimile No. | Telephone No. |

Form PCT/ISA/210 (second sheet) (April 2007)

8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 42196713560 B

- JP 51018991 B